# EUROPEAN PATENT APPLICATION

(11) **EP 1 143 128 A2**
(43) Date of publication of application: **10.10.2001**
(21) Application number: 01302626.5
(22) Date of filing: 21.03.2001
(51) Int. Cl.: F02C 7/232, F02C 7/236, F02C 7/22

(54) **Fuel supply system**

(30) Priority: 07.04.2000 GB 0008470
(71) Applicant: ROLLS-ROYCE plc, London, SW1E 6AT (GB)
(72) Inventor: Clarke, Andrew, Hucknall, Nottingham NG15 6TS (GB); Loxley, Russell Allan, Leicestershire LE67 4SZ (GB)
(74) Representative: Gunn, Michael Alan

(57) **Abstract**

A bypass valve (22) and vent valve (24) are connected in parallel with the normal flow path between a low-pressure fuel pump (12) and a high-pressure fuel pump (16). When a low fuel inlet pressure is detected the bypass valve (22) and vent valve (24) are opened. Gas is vented out of the fuel system and bypasses a heat exchanger (14) between the low and high-pressure pumps (12 and 16), thus avoiding the need to overcome vapour lock between the two pumps. The vent valve (24) passes gas to a drain tank (26) and then closes to prevent the escape of fuel as the high-pressure pump (16) primes.

## Description

The present invention relates to fluid apparatus and in particular to fluid apparatus for use in the fuel system of a gas turbine engine.

It is a requirement for a gas turbine engine to be restarted in flight without the assistance of the fuel tank pumps following an engine shut down due to fuel starvation.

Following an engine shut down due to fuel starvation the engine fuel system is partially filled with air and vapour. The engine will not re-start until the fuel system is primed and the air and vapour compressed, condensed or expelled.

The primary inhibition to priming is the potential vapour lock in the engine fuel heat exchanger and the high-pressure fuel pump. Priming can only take place if the local pressure is increased or the heat exchanger is cooled to allow condensation of the fuel to occur. It is known to achieve condensation of the fuel by reducing the aircraft altitude to increase the system pressure and/or providing an additional heat exchanger.

The present invention seeks to provide a fluid apparatus and method of operating the same that allows a fluid pump to be primed and started without the need to change the aircraft altitude or the need for an additional heat exchanger.

According to the present invention a fluid apparatus comprises a fluid pump having an inlet and an outlet to permit a flow of fluid therethrough and bypass means connected adjacent the inlet to the fluid pump, whereby in normal operation the bypass means is closed so that all the fluid passes through the fluid pump, however when the fluid pressure at the inlet to the fluid pump drops below a predetermined level the bypass means opens to allow the fluid to bypass the fluid pump, the bypass means closing to return the fluid flow to the inlet of the fluid pump when the fluid pressure increases above the predetermined level.

In the preferred embodiment of the present invention the bypass means incorporates a vent valve which vents any vapour entrained within the fluid flow passing therethrough. Preferably the vent valve is pressure responsive and vapour is vented to a drain tank.

The bypass means is electrically operated and may be a solenoid operated valve.

A heat exchanger may be provided adjacent the inlet to the fluid pump the bypass means operating to allow the fluid to bypass the heat exchanger when the fluid pressure is below a predetermined level.

The fluid may be fuel and the apparatus is suitable for use in the fuel system of a gas turbine engine.

A further aspect of the present invention is a method of operating a fluid apparatus which comprises a fluid pump having an inlet and an outlet and bypass means adjacent the inlet to the fluid pump, the method comprising the steps of monitoring the pressure of the fluid at the inlet to the fluid pump, comparing the pressure of the fluid at the inlet to the fluid pump with a predetermined value, opening the bypass means if the pressure of the fluid at the inlet to the pump is below the predetermined value and closing the bypass means when the fluid pressure increases above the predetermined value.

The present invention will now be described by way of example and with reference to the accompanying figures in which;

Figure 1 is a diagrammatic view of a fuel system in accordance with the present invention.

Figure 2 is an enlarged cross-sectional view of part of the fuel system shown in figure 1.

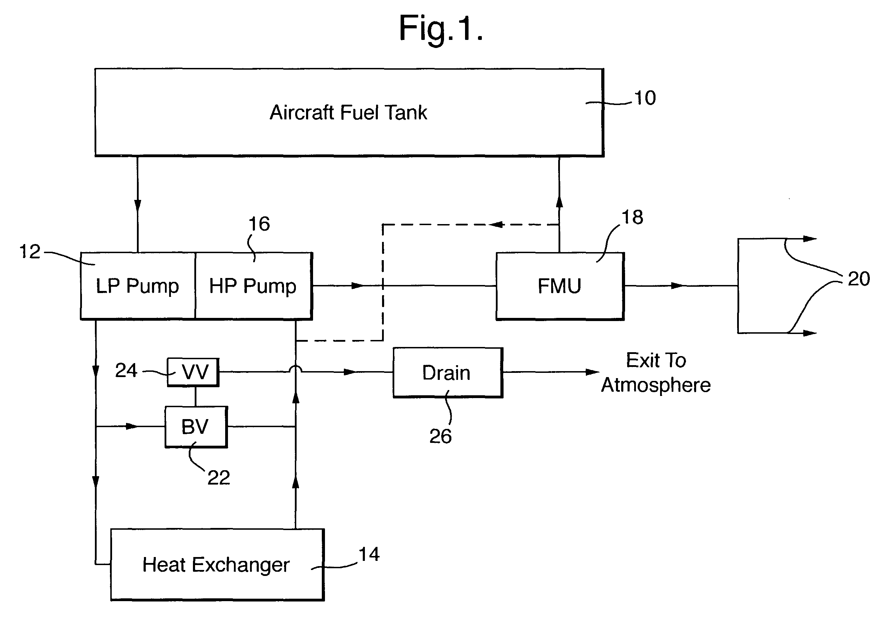

Referring to figure 1, in normal operation a low-pressure pump 12 provides fuel from aircraft fuel tank 10 to a heat exchanger 14. Fuel passes through the heat exchanger 14 to the high-pressure pump 16, which provides fuel to the fuel-metering unit 18. The fuel-metering unit 18 provides the required flow of fuel to the engine burners 20 to meet the engine demands. The fuel metering unit 18 spills any fuel not required by the engine back to the aircraft fuel tank 10 or to the inlet of the high pressure pump 16 (shown by the dotted line in figure 1).

The distribution of the fuel in the system is controlled by the engine electronic control (not shown). When the engine electronic control recognises that the engine is windmilling and has a low fuel inlet pressure it opens a bypass 22 and vent valve 24. The bypass and vent valves 22 and 24 are connected in parallel with the normal flow path between the low and high-pressure fuel pumps, 12 and 16 respectively. Gas is vented out of the fuel system and gas and fuel bypass the heat exchanger 14 between the low and high-pressure pumps 12 and 16, thus avoiding the need to overcome vapour locks between the two pumps. The vent valve 24 passes gas out of the fuel system to a drain tank 26, or other disposal means (not shown), and then closes to prevent the escape of fuel as the high-pressure pump 16 primes.

Operation of the bypass valve 22 and the vent valve 24 will now be described in more detail with reference to figure 2. The two valves 22 and 24 could by separate units however in the preferred embodiment shown in figure 2 the two valves 22 and 24 are located in the same housing and are controlled by the engine electronic control (not shown) . Both of the valves 22 and 24 have position indicator switches 30 and 32, which tell the engine electronic, control the status of the valves 22 and 24 i.e. open or closed. The engine electronic control checks the status of the valves 22 and 24 as indicated by switches 30 and 32 respectively against the commanded position.

At low fuel inlet pressures the engine electronic control electrically powers solenoid 34. The solenoid 34 moves the plunger 36 to connect together ports A and B which control the bypass valve 22 and ports C and D which control the vent valve 24. When ports A and B are at the same pressure the bypass valve 22 opens and vapour passes through the bypass valve 22 to the vent valve 24. The loss of high pressure at the ports C and D causes the spring 38 in the vent valve 24 to open the valve. When the vent valve 24 opens the gas passes through the vent valve 24, to the drain tank 26 via the line 40. The line 40 out of the vent valve 24 is restricted so that once all the fuel vapour/gas has passed out of the vent valve 24 the fuel pressure is sufficient to automatically close the vent valve.

To ensure full priming of the high-pressure fuel pump 16 the solenoid 34 is powered open by the engine electronic control until the engine reaches idle speed. At this speed the solenoid 34 is powered to close the bypass valve 22 returning the system to its normal operating mode.

The fuel system in accordance with the present invention allows the fuel pump to be primed and restarted after fuel starvation without having to change the aircraft altitude or provide an additional heat exchanger.

The present invention has been described with reference to a fuel system of a gas turbine engine however it will be appreciated that it is applicable to any fluid system where a fluid pump has to be restarted following a vapour lock.

It will be appreciated that whilst the present invention has been described with reference to valves 22 and 24 which are electrically controlled, the valves 22 and 24 may be pressure responsive. The valves 22 and 24 operating in response to changes in system pressure and fluid flow conditions.

Whilst in the preferred embodiment of the present invention a combination of both a bypass 22 and vent 24 valve are used, the performance may be improved by using one or other of the valves 22 and 24 alone in the fluid system.

## Claims

1. Fluid apparatus comprising a fluid pump (12) having an inlet and an outlet to permit a flow of fluid therethrough **characterised in that** bypass means (22) are connected adjacent the inlet to the fluid pump (12), whereby in normal operation the bypass means (22) is closed so that all the fluid passes through the fluid pump (12), however when the fluid pressure at the inlet to the fluid pump (12) drops below a predetermined level the bypass means (22) opens to allow the fluid to pass therethrough, the bypass means (22) closing to return the fluid flow to the inlet of the fluid pump (12) when the fluid pressure increases above the predetermined level.

2. Fluid apparatus as claimed in claim 1 **characterised in that** the bypass means (22) incorporates a vent valve (24) which vents any vapour entrained within the fluid flow passing therethrough.

3. Fluid apparatus as claimed in claim 2 **characterised in that** the vapour is vented to a drain tank (26).

4. Fluid apparatus as claimed in claim 2 or claim 3 **characterised in that** the vent valve (24) is pressure responsive.

5. Fluid apparatus as claimed in any preceding claim **characterised in that** the bypass means (22) is electrically operated.

6. Fluid apparatus as claimed in claim 5 **characterised in that** the bypass means is a solenoid operated valve.

7. Fluid apparatus as claimed in any preceding claim **characterised in that** a heat exchanger (14) is provided adjacent the inlet to the fluid pump (12) the bypass means (22) operating to allow the fluid to bypass the heat exchanger (14) when the fluid pressure is below a predetermined level.

8. Fluid apparatus as claimed in any preceding claim **characterised in that** the fluid is fuel.

9. Fluid apparatus as claimed in any preceding claim **characterised in that** said apparatus is for use in the fuel system of a gas turbine engine.

10. A method of operating a fluid apparatus which comprises a fluid pump (12) having an inlet and an outlet **characterised in that** bypass means (22) are located adjacent the inlet to the fluid pump (12), the method comprising the steps of monitoring the pressure of the fluid at the inlet to the fluid pump (12), comparing the pressure of the fluid at the inlet to the fluid pump (12) with a predetermined value, opening the bypass means (22) if the pressure of the fluid at the inlet to the pump (12) is below the predetermined value and closing the bypass means (22) when the fluid pressure increases above the predetermined value.
